(19)

Europäisches
Patentamt
European
Patent Office
Office européen
des brevets

(11) **EP 4 534 963 A1**

(12) **EUROPEAN PATENT APPLICATION**
published in accordance with Art. 153(4) EPC

(43) Date of publication:
**09.04.2025 Bulletin 2025/15**

(21) Application number: **22943848.6**

(22) Date of filing: **19.12.2022**

(51) International Patent Classification (IPC):
*G01J 3/36* (2006.01)      *G01J 3/44* (2006.01)
*G01N 21/65* (2006.01)

(52) Cooperative Patent Classification (CPC):
**G01J 3/36; G01J 3/44; G01N 21/65**

(86) International application number:
**PCT/JP2022/046722**

(87) International publication number:
**WO 2023/228449 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.05.2022 JP 2022086928**

(71) Applicant: **Hamamatsu Photonics K.K.
Hamamatsu-shi, Shizuoka 435-8558 (JP)**

(72) Inventors:
• **TSUCHIYA Kunihiko
  Hamamatsu-shi, Shizuoka 435-8558 (JP)**
• **IKEMURA Kenichiro
  Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **SPECTROSCOPY DEVICE, RAMAN SPECTROSCOPIC MEASUREMENT DEVICE, AND SPECTROSCOPY METHOD**

(57)     A spectroscopic device 5 receives light L1 wavelength-resolved in a predetermined direction by a spectroscopic optical system 4 including a spectroscopic element to output spectroscopic spectrum data of the light L1, and the spectroscopic device includes a pixel unit 11 including a plurality of pixels 21 receiving the wavelength-resolved light L1 to convert the light into an electrical signal, and the plurality of pixels 21 being arranged in a row direction along a wavelength resolution direction and in a column direction perpendicular to the row direction, a conversion unit 12 converting the electrical signal from the plurality of pixels 21 into a number of photons, and a generation unit 13 integrating the number of photons of a plurality of pixels 21 belonging to the same column to generate spectroscopic spectrum data based on an integration result.

Fig.1

EP 4 534 963 A1

## Description

### Technical Field

The present disclosure relates to a spectroscopic device, a Raman spectroscopic measurement device, and a spectroscopic method.

### Background Art

As a conventional spectroscopic device, for example, a spectroscopic device described in Patent Literature 1 is mentioned. This conventional spectroscopic device is a so-called Raman spectroscopic device. The spectroscopic device includes a means for linearly irradiating excitation light, a movable stage on which a sample is placed, an objective lens focusing Raman light from an excitation light irradiation region, a slit provided at an image forming position of the Raman light, a spectroscope dispersing light passing through the slit, a CCD detector detecting a Raman spectrum image, and a control device controlling mapping measurement by synchronization between the movable stage and the CCD detector.

### Citation List

### Patent Literature

Patent Literature 1: Japanese Unexamined Patent Publication No. 2016-180732

### Summary of Invention

### Technical Problem

In the field of spectroscopic measurement requiring high sensitivity and high accuracy, such as Raman spectroscopy, fluorescence spectroscopy, and plasma spectroscopy, vertical binning of a CCD image sensor is used to acquire spectroscopic spectrum data in order to improve an SN ratio of a signal. In the vertical binning in the CCD image sensor, charges generated in each pixel are added for a plurality of stages. In the CCD image sensor, readout noise is generated only in an amplifier of the final stage, and does not increase in the process of vertical binning. Therefore, as the number of stages of vertical binning increases, the SN ratio of the signal can be improved.

As the image sensor, in addition to CCD, a CMOS image sensor is also known. However, at present, CMOS image sensors are not widely used in the field of spectroscopic measurement requiring high sensitivity and high accuracy. In the CMOS image sensor, an amplifier is arranged in each pixel, and a charge is converted into a voltage for each pixel. In the case of performing vertical binning by a conventional CMOS image sensor, since readout noise is also integrated as the number of stages of vertical binning increases, there is a problem in that an SN ratio of a signal is lower than that in the case of using a CCD image sensor.

The present disclosure has been made to solve the above problems, and an object thereof is to provide a spectroscopic device, a Raman spectroscopic measurement device, and a spectroscopic method capable of acquiring spectroscopic spectrum data with an excellent SN ratio.

### Solution to Problem

The gist of a spectroscopic device, a Raman spectroscopic measurement device, and a spectroscopic method according to an aspect of the present disclosure is as described in the following [1] to [12].

[1] A spectroscopic device receiving light wavelength-resolved in a predetermined direction by a spectroscopic optical system including a spectroscopic element to output spectroscopic spectrum data of the light, the spectroscopic device including: a pixel unit including a plurality of pixels receiving the wavelength-resolved light to convert the light into an electrical signal, and the plurality of pixels being arranged in a row direction along a wavelength resolution direction and in a column direction perpendicular to the row direction; a conversion unit converting the electrical signal from the plurality of pixels into a number of photons; and a generation unit integrating the number of photons of a plurality of pixels belonging to the same column to generate spectroscopic spectrum data based on an integration result.

In this spectroscopic device, an electrical signal output from each pixel is converted into the number of photons on the basis of light received by each pixel constituting the pixel unit. When the electrical signal is converted into the number of photons, for example, the number of photons of a pixel that has not received light is zero. Therefore, when the number of photons of the plurality of pixels belonging to the same column is integrated after conversion into the number of photons, the influence of readout noise of each pixel can be sufficiently reduced. Therefore, in this spectroscopic device, the spectroscopic spectrum data can be acquired with an excellent SN ratio.

[2] The spectroscopic device described in [1], further including a specifying unit specifying a pixel to be used for integration of the number of photons among the plurality of pixels belonging to the same column. In this case, by specifying the pixel suitable for integration of the number of photons, the influence of the readout noise of each pixel can be more sufficiently reduced. By reducing the influence of the readout noise of each pixel, the conversion accuracy from the electrical signal to the number of photons is enhanced, and the SN ratio of the spectroscopic spectrum data is further improved.

[3] The spectroscopic device described in [2], wherein the specifying unit specifies a pixel whose readout noise is equal to or less than a threshold as the pixel to be used for integration of the number of photons. Thereby, the influence of the readout noise of each pixel can be more sufficiently reduced. By reducing the influence of the readout noise of each pixel, the conversion accuracy from the electrical signal to the number of photons is enhanced, and the SN ratio of the spectroscopic spectrum data is further improved.

[4] The spectroscopic device described in [3], wherein the threshold of the readout noise is set to 0.3 [e-rms]. Thereby, an erroneous conversion rate at the time of converting the electrical signal into the number of photons can be suppressed to 10% or less.

[5] The spectroscopic device described in any one of [2] to [4], wherein the specifying unit specifies the pixel to be used for integration of the number of photons such that the number of pixels to be used for integration of the number of photons is the same in each column. In this case, it is possible to align integrated values of the readout noise of the pixels of each column to be used for integration of the number of photons in the row direction. Therefore, the SN ratio of the spectroscopic spectrum data can be stably improved.

[6] The spectroscopic device described in any one of [2] to [5], wherein the specifying unit specifies the pixel to be used for integration of the number of photons and an integration ratio of the pixels on the basis of aberration information of the light in the spectroscopic optical system, and the generation unit integrates the number of photons of the plurality of pixels by using the integration ratio. According to such a configuration, even when distortion due to aberration occurs in the image of the wavelength-resolved light, the number of photons of the plurality of pixels can be suitably integrated.

[7] The spectroscopic device described in any one of [2] to [6], wherein the specifying unit holds in advance area information indicating an area where there is no input of the light in the pixel unit, and excludes a pixel corresponding to the area information from the integration of the number of photons. In this case, by excluding pixels not requiring integration of the number of photons, the influence of the readout noise of each pixel can be further reduced.

[8] The spectroscopic device described in any one of [1] to [7], wherein the conversion unit includes a first conversion unit converting the electrical signal into a digital value and a second conversion unit converting the digital value into a number of photons on the basis of reference data held in advance. In this case, the number of photons of each pixel can be acquired in a state where the influence of variations in the gain and offset of each pixel is suppressed.

[9] The spectroscopic device described in any one of [1] to [8], further including an analysis unit analyzing the spectroscopic spectrum data. In this case, the spectroscopic device is provided with a spectroscopic spectrum data analysis function, so that convenience is improved.

[10] The spectroscopic device described in any one of [1] to [9], further including a spectroscopic optical system including a spectroscopic element dispersing the light in the wavelength resolution direction. In this case, the spectroscopic device is provided with a wavelength resolution function of the light, so that convenience is improved.

[11] A Raman spectroscopic measurement device including: the spectroscopic device described in any one of [1] to [10]; a light source unit generating light with which a sample is irradiated; and a light guiding optical system guiding Raman scattered light generated by irradiating the sample with the light to the spectroscopic device.

In this Raman spectroscopic measurement device, an electrical signal output from each pixel is converted into the number of photons on the basis of Raman scattered light received by each pixel constituting the pixel unit. When the electrical signal is converted into the number of photons, for example, the number of photons of a pixel that has not received Raman scattered light is zero. Therefore, when the number of photons of the plurality of pixels belonging to the same column is integrated after conversion into the number of photons, the influence of readout noise of each pixel can be sufficiently reduced. Therefore, in this Raman spectroscopic measurement device, spectroscopic spectrum data of the Raman scattered light can be acquired with an excellent SN ratio.

[12] A spectroscopic method of receiving light wavelength-resolved in a predetermined direction to acquire spectroscopic spectrum data of the light, the spectroscopic method including: a light receiving step of receiving the wavelength-resolved light by a plurality of pixels arranged in a row direction along a wavelength resolution direction and in a column direction perpendicular to the row direction to convert the light into an electrical signal; a converting step of converting the electrical signal from the plurality of pixels into a number of photons; and a generating step of integrating the number of photons of a plurality of pixels belonging to the same column to generate spectroscopic spectrum data based on an integration result.

In this spectroscopic method, an electrical signal output from each pixel is converted into the number of photons on the basis of light received by each pixel. When the electrical signal is converted into the number of photons, for example, the number of photons of a pixel that has not received light is zero. Therefore, when the number of photons of the plurality of pixels belonging to the same column is integrated after conversion into the number of photons, the influence of readout noise of each pixel can be sufficiently reduced. Therefore, in this spectroscopic method, the spectroscopic spectrum data can be acquired with an excellent SN ratio.

**Advantageous Effects of Invention**

According to the present disclosure, the spectroscopic spectrum data can be acquired with an excellent SN ratio.

**Brief Description of Drawings**

FIG. 1 is a block diagram illustrating a configuration of a Raman spectroscopic measurement device according to an embodiment of the present disclosure.
FIG. 2 is a view illustrating a structure of an imaging sensor.
FIG. 3 is a graph showing a relationship between a number of electrons and a probability density.
FIGS. 4(a) and 4(b) are graphs showing an example of conversion from an analog value to a digital value.
FIG. 5 is a schematic view illustrating a step of acquiring an offset value.
FIG. 6 is a schematic view illustrating a step of acquiring a gain.
FIG. 7 is a schematic view illustrating a correspondence relationship between a gain and an offset value, and a threshold.
FIG. 8 is a value schematically illustrating a process of converting a digital value for each pixel into a number of electrons.
FIG. 9 is a schematic view illustrating an example of a readout noise map in a pixel unit.
FIG. 10 is a graph showing a relationship between readout noise and an erroneous conversion rate at the time of converting an electrical signal into a number of photons.
FIG. 11(a) is a schematic view illustrating an example of a spectroscopic spectrum image having aberration, and FIG. 11(b) is a schematic view illustrating an example of spectroscopic spectrum data obtained on the basis of the spectroscopic spectrum image illustrated in FIG. 11(a).
FIG. 12 is a schematic view illustrating an example of an integration ratio map in the pixel unit.
FIG. 13 is a schematic graph showing spectroscopic spectrum data obtained by vertical binning using the integration ratio map.
FIG. 14 is a flowchart illustrating a spectroscopic method according to an embodiment of the present disclosure.

**Description of Embodiments**

Hereinafter, preferred embodiments of a spectroscopic device and a Raman spectroscopic measurement device according to an aspect of the present disclosure will be described in detail with reference to the drawings.

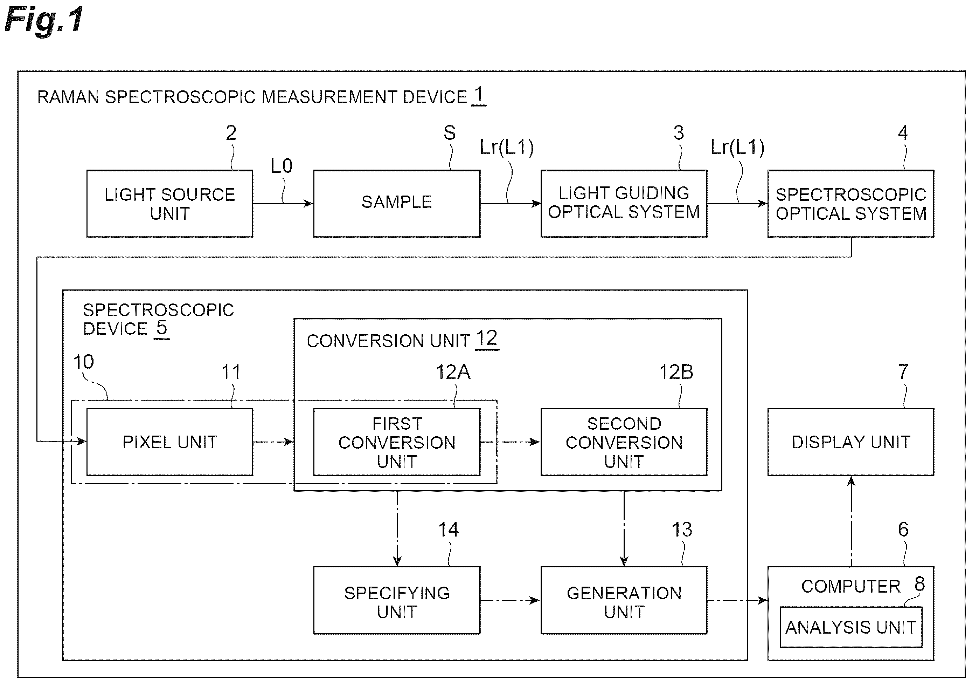

FIG. 1 is a block diagram illustrating a configuration of a Raman spectroscopic measurement device according to an embodiment of the present disclosure. A Raman spectroscopic measurement device 1 is a device measuring physical properties of a sample S by using Raman scattered light Lr. In the Raman spectroscopic measurement device 1, the sample S is irradiated with light L1 from a light source unit 2, the Raman scattered light Lr generated by an interaction between the light L1 and the sample S is detected by a spectroscopic device 5, and spectroscopic spectrum data of the Raman scattered light Lr is acquired. By analyzing the spectroscopic spectrum data acquired by the spectroscopic device 5 with a computer 6, various physical properties such as the molecular structure, crystallinity, orientation, and distortion amount of the sample S can be evaluated. Examples of the sample S include semiconductor materials, polymers, cells, and pharmaceuticals.
As illustrated in FIG. 1, the Raman spectroscopic measurement device 1 includes the light source unit 2, a light guiding optical system 3, a spectroscopic optical system 4, the spectroscopic device 5, the computer 6, and a display unit 7. In the following description, for convenience, light incident on the spectroscopic device 5 through the spectroscopic optical system 4 may be referred to as the light L1 to be distinguished from the Raman scattered light Lr. In the spectroscopic device 5 incorporated in the Raman spectroscopic measurement device 1, the light L1 refers to the Raman scattered light Lr.
The light source unit 2 is a portion generating light L0 with which the sample S is irradiated. As a light source constituting the light source unit 2, for example, a laser light source serving as an excitation light source for Raman spectroscopy, a light emitting diode, or the like can be used. The light guiding optical system 3 is a portion guiding the Raman scattered light Lr generated by irradiating the sample S with the light L0 to the spectroscopic device 5. The light guiding optical system 3 includes, for example, a collimating lens, one or a plurality of mirrors, a slit, and the like.

The spectroscopic optical system 4 is a portion wavelength-resolving the light L1 in a predetermined direction. The spectroscopic optical system 4 includes a spectroscopic element dispersing the light L1 in a predetermined wavelength resolution direction. As the spectroscopic element, for example, a prism, a diffraction grating (grating) such as a planar diffraction grating or a concave diffraction grating, and the like can be used. The Raman scattered light Lr is dispersed by the spectroscopic optical system 4 and input to the spectroscopic device 5.

In FIG. 1, the spectroscopic optical system 4 is configured separately from the spectroscopic device 5, but the spectroscopic optical system 4 may be incorporated as a constituent element of the spectroscopic device 5. That is, the spectroscopic device 5 may further include the spectroscopic optical system 4 including a spectroscopic element that disperses the light L1 in the wavelength resolution direction. In this case, the spectroscopic device 5 is provided with a wavelength resolution function of the light L1, so that convenience is improved.

The spectroscopic device 5 is a portion receiving the light L1 wavelength-resolved in a predetermined direction to output spectroscopic spectrum data of the light L1. In the present embodiment, the spectroscopic device 5 receives the Raman scattered light Lr dispersed in a predetermined wavelength resolution direction by the spectroscopic optical system 4 and outputs spectroscopic spectrum data of the Raman scattered light Lr to the computer 6.

The computer 6 physically includes a storage device such as a RAM or a ROM, a processor (arithmetic circuit) such as a CPU, a communication interface, and the like. As the computer 6, for example, a personal computer, a cloud server, or a smart device (smartphone, tablet terminal, or the like) can be used. The computer 6 is connected to the light source unit 2 of the Raman spectroscopic measurement device 1 and the spectroscopic device 5 so as to be able to communicate information with one another, and can integrally control these constituent elements. The computer 6 also functions as an analysis unit 8 analyzing physical properties of the sample S on the basis of the spectroscopic spectrum data received from a generation unit 13. The computer 6 outputs information indicating the analysis result of the analysis unit 8 to the display unit 7.

As illustrated in FIG. 1, the spectroscopic device 5 includes a pixel unit 11, a conversion unit 12, the generation unit 13, and a specifying unit 14. The pixel unit 11 includes a plurality of pixels 21 receiving the wavelength-resolved light L1 and converting the light into an electrical signal. In the present embodiment, the pixel unit 11 and a first conversion unit 12A (described later) configured by an imaging sensor 10. In the present embodiment, the spectroscopic device 5 is configured as a camera including the imaging sensor 10, a second conversion unit 12B (described later), the generation unit 13, and the specifying unit 14.

Here, the spectroscopic device 5 is separated from the computer 6, but the spectroscopic device 5 may be formed by integrating the camera including the imaging sensor 10, the second conversion unit 12B, the generation unit 13, and the specifying unit 14 with the computer 6 (analysis unit 8) connected to the camera so as to be able to communicate information with each other electrically or wirelessly. In this case, the spectroscopic device is provided with a spectroscopic spectrum data analysis function, so that convenience is improved. The spectroscopic device 5 may be formed by integrating the camera including the imaging sensor 10 and the second conversion unit 12B with the computer 6 functioning as the generation unit 13, the specifying unit 14, and the analysis unit 8.

Examples of the imaging sensor 10 include a quantitative complementary metal oxide semiconductor (qCMOS) image sensor (registered trademark), a single photon avalanche diode (SPAD) image sensor, and a multi-pixel photon counter (MPPC: registered trademark) capable of identifying the number of photons or the number of photoelectrons. In the present embodiment, the imaging sensor 10 includes a qCMOS image sensor. In the present embodiment, the number of photons refers to the number of photons incident to each pixel 21 of the imaging sensor 10 or the number of photoelectrons generated in each pixel 21 of the imaging sensor 10.

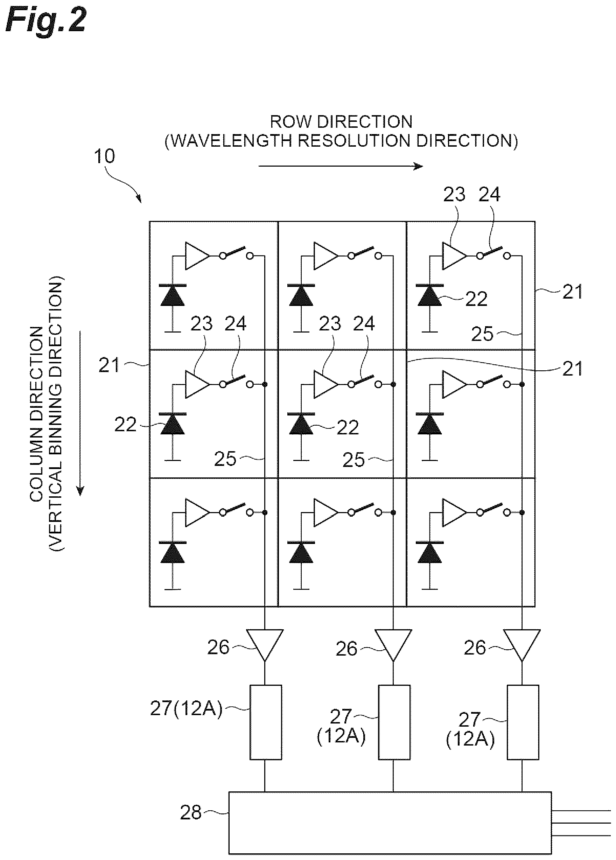

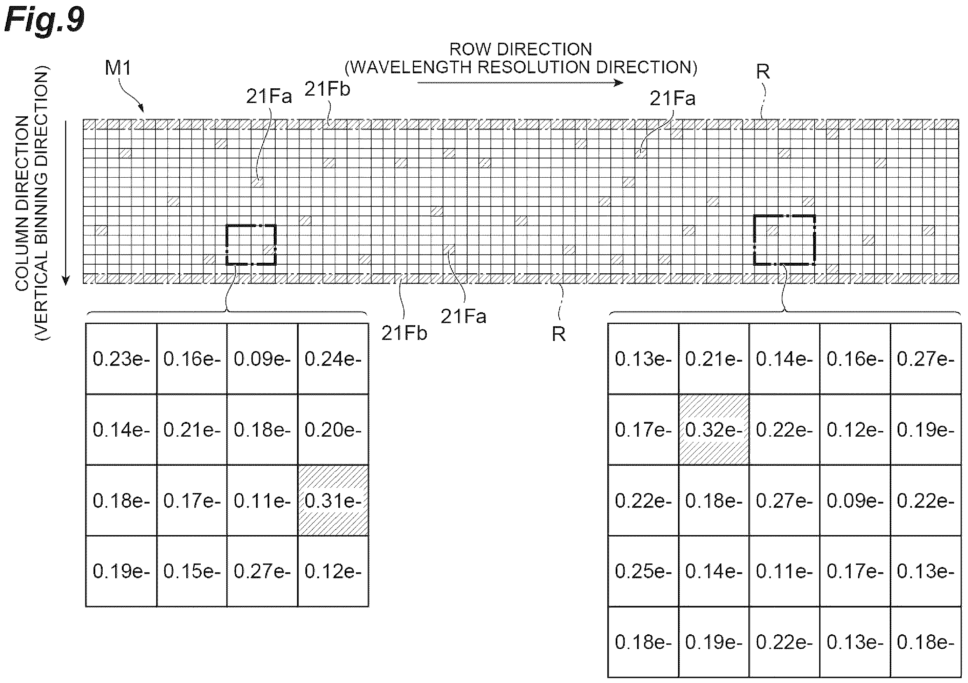

FIG. 2 is a view illustrating a structure of an imaging sensor. FIG. 2 illustrates a qCMOS image sensor among the above-described sensors. As illustrated in FIG. 2, in the pixel unit 11 of the imaging sensor 10, a plurality of pixels 21 arranged in a row direction and a column direction perpendicular to the row direction. Here, the row direction is along the wavelength resolution direction by the spectroscopic optical system 4, and the column direction is along a vertical binning direction described later. In FIG. 2, for convenience of description, the pixels 21 of 3 rows × 3 columns are illustrated, but the pixels 21 of n rows × m columns are arranged in the actual pixel unit 11 (see FIG. 9 or the like).

Each pixel 21 includes a photodiode 22 and an amplifier 23. The photodiode 22 accumulates electrons (photoelectrons) generated by the input of the light L1 as charges. The amplifier 23 converts the charges accumulated in the photodiode 22 into an electrical signal (for example, a signal indicating a voltage value) and amplifies the electrical signal. The electrical signal amplified by the amplifier 23 is transferred to a vertical signal line 25 connecting the pixels 21 in the row direction to each other by switching a selection switch 24 of each pixel 21. The electrical signal transferred to the vertical signal line 25 is sent to an A/D converter 27 via a low-pass filter 26 for noise removal. Note that, in the imaging sensor 10, each pixel 21 may include the low-pass filter 26 and the A/D converter 27.

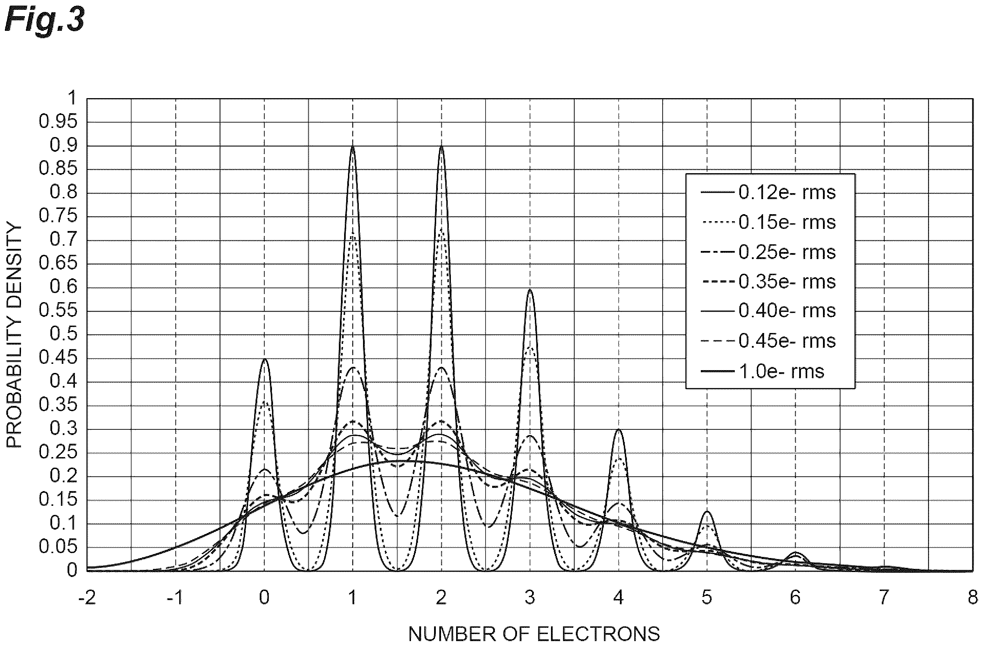

When the electrical signal amplified by the amplifier 23 is read, readout noise which is random noise is generated in the amplifier 23. FIG. 3 is a graph showing a relationship between a number of electrons and a probability density. In FIG. 3, the horizontal axis represents the number of electrons, and the vertical axis represents the probability density. As shown in FIG. 3, the number of electrons generated by the input photons follows the Poisson distribution.

FIG. 3 shows the probability distribution of electrons when two photons are input on average to one pixel for each readout noise. In FIG. 3, as the readout noise, seven examples of 0.12 [e-rms], 0.15 [e-rms], 0.25 [e-rms], 0.35 [e-rms], 0.40 [e-rms], 0.45 [e-rms], and 1.0 [e-rms] are shown. From the results shown in FIG. 3, it can be seen that the smaller the readout noise, the sharper the peak of the waveform of the probability distribution appears, and the separation of the distribution for each number of electrons becomes clear. Therefore, it is possible to obtain the magnitude of the readout noise capable of classifying the number of electrons depending on whether or not the peak of the probability distribution can be identified.

As illustrated in FIG. 1, the conversion unit 12 is a portion converting the electrical signal from the plurality of pixels 21 into a number of photons. The conversion unit 12 includes the first conversion unit 12A converting the electrical signal into a digital value and the second conversion unit 12B converting the digital value into the number of photons on the basis of threshold data (reference data) held in advance.

In the present embodiment, the first conversion unit 12A includes the A/D converter 27 described above. The A/D converter 27 converts an analog value indicated by the electrical signal output from the amplifier 23 of each of the plurality of pixels 21 into a digital value. The converted digital value is output to the second conversion unit 12B via an output unit 28. The digital value output from the A/D converter 27 is expressed by the following Formula (1).

Digital value [DN] = Gain [DN/e] × Number of electrons [e] + Offset value [DN]                    (1)

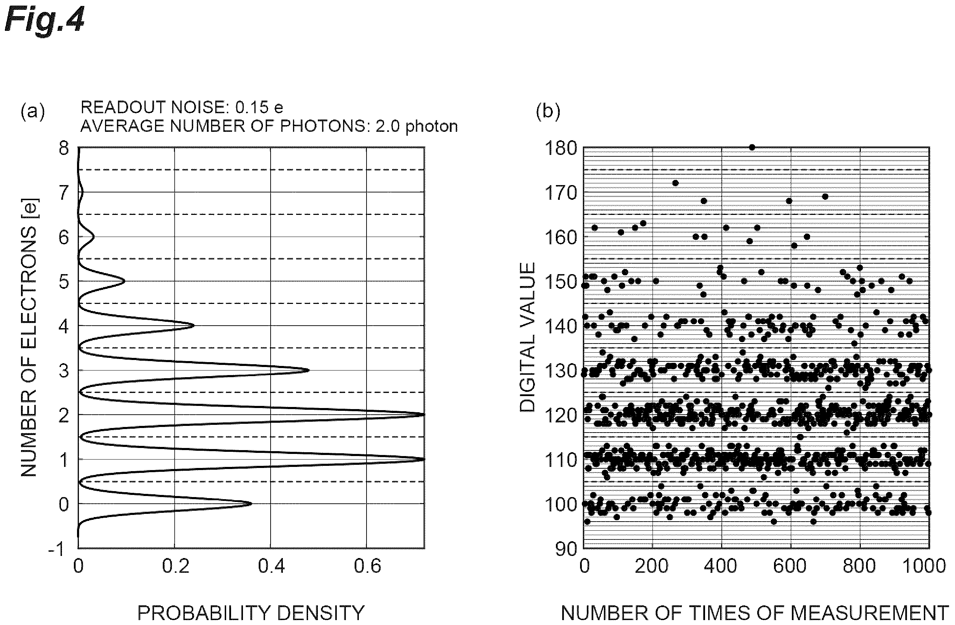

FIG. 4(a) and FIG. 4(b) are graphs showing an example of conversion from an analog value to a digital value. FIG. 4(a) shows the probability distribution of electrons when two photons are input on average to one pixel in a case where the readout noise is 0.15 [e-rms]. In FIG. 4(a), thresholds for dividing the number of electrons are set with reference to an intermediate value of the numbers of electrons, such as 0.5e, 1.5e, 2.5e ... (see broken lines in FIG. 4(a)). Data for distinguishing these numbers of electrons from each other is the above-described threshold data.

In FIG. 4(b), the gain is 11 [DN/e], and the offset value is 100 [DN]. As shown in FIG. 4(b), when the gain is 11 [DN/e], the distribution of the digital values can be approximated to the distribution of the analog values. Furthermore, since the gain is an odd number, taking of a digital value corresponding to the threshold is suppressed. Since the gain value is large, the output digital value can be approximated by an analog value. In the present embodiment, the gain of the pixel unit 11 may be, for example, 10 [DN/e] or more.

Returning to FIG. 1, the second conversion unit 12B, and the generation unit 13 and the specifying unit 14 described later are physically configured by a computer system including a storage device such as a RAM or a ROM, a processor (arithmetic circuit) such as a CPU, a communication interface, and the like. The second conversion unit 12B may include a programmable logic controller (PLC), and may include an integrated circuit such as a field-programmable gate array (FPGA).

The second conversion unit 12B holds reference data for converting the digital value output from the first conversion unit 12A into the number of photons. For example, a lookup table is used as the reference data. The reference data is generated in consideration of variations in gain and offset value among pixels 21. The reference data is generated, for example, on the basis of the gain and the offset value of each of the plurality of pixels 21. The reference data includes, for example, threshold data of each pixel 21.

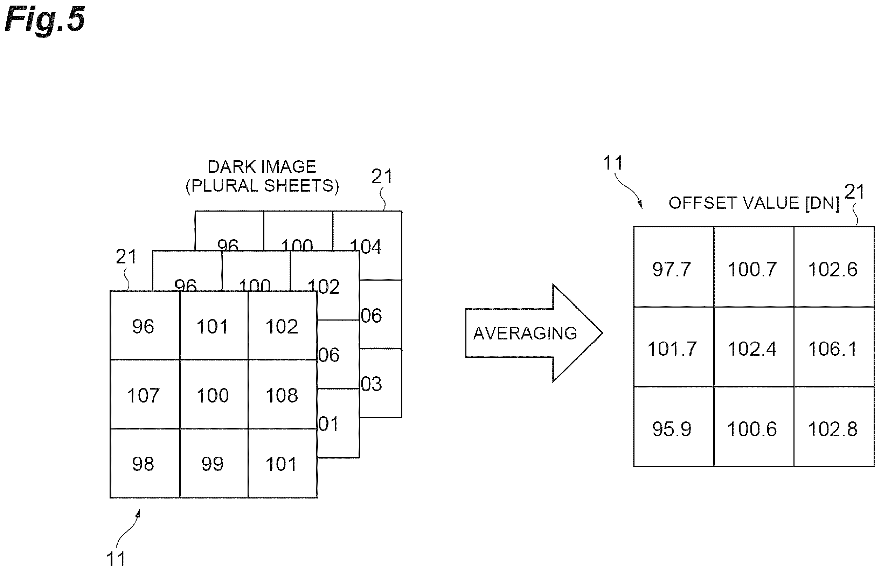

The threshold data is data for dividing the number of electrons. FIG. 5 is a schematic view illustrating a step of acquiring an offset value. The digital value output from the A/D converter 27 is expressed by the above-described Formula (1). The offset value is indicated by a digital value output in a state where the light L1 is not input. In the present embodiment, as illustrated in FIG. 5, a plurality of digital values is acquired from a plurality of dark images acquired by the pixel unit 11 in a state where the light L1 is not input. Then, an offset value is acquired by averaging the acquired digital values for each pixel.

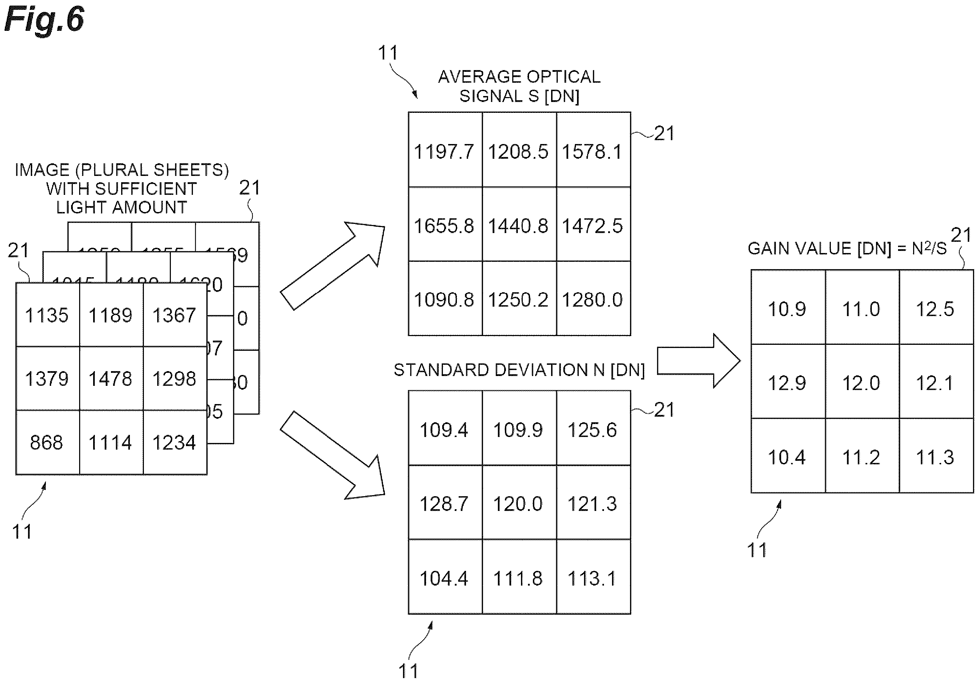

FIG. 6 is a schematic view illustrating a step of acquiring a gain. In acquiring the gain of each pixel 21, first, a plurality of frame images by the pixel unit 11 is acquired with a sufficient light amount. Then, an average optical signal value S [DN] of the digital values in each pixel 21 and a standard deviation N [DN] are acquired. In this case, since the gain is represented by $N^2/S$, the gain can be derived from the average optical signal value S and the standard deviation N.

For example, when the intermediate value of the numbers of electrons is set as a threshold, the threshold indicating the lower limit of each number of electrons is expressed by the following Formula (2). Furthermore, a threshold indicating the upper limit of each number of electrons is expressed by the following Formula (3). A range represented by the lower limit threshold and the upper limit threshold is a range of the threshold corresponding to the number of electrons.

Threshold (lower value) = (Number of electrons - 0.5) × Gain + Offset value                    (2)

Threshold (upper limit) = (Number of electrons + 0.5) × Gain + Offset value                (3)

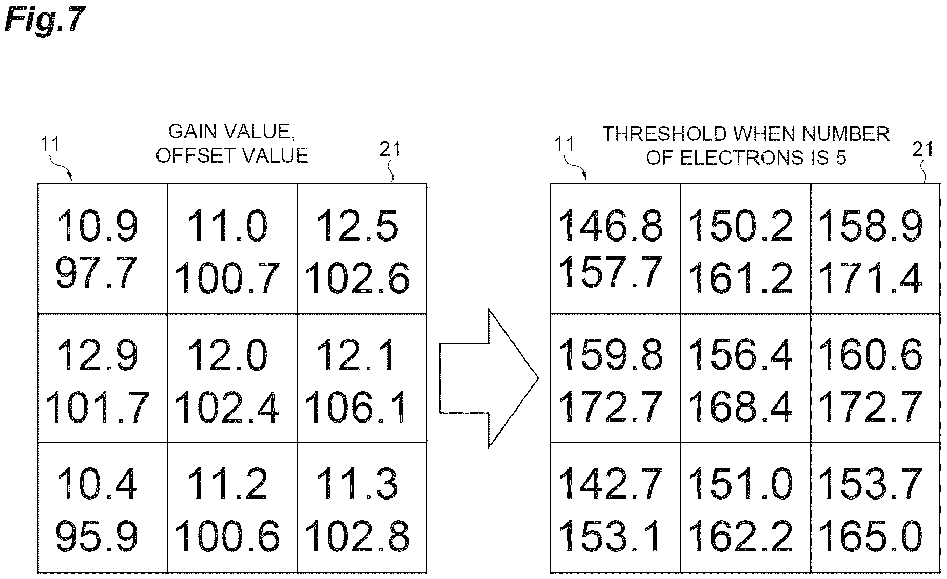

FIG. 7 is a view schematically illustrating a correspondence relationship between a gain and an offset value, and a threshold. In FIG. 7, the threshold when it is determined that the number of electrons is 5 is illustrated for each pixel. For example, when the gain is 10.9 [DN/e] and the offset value is 97.7 [DN], the lower limit threshold is 146.8 [DN] and the upper limit threshold is 157.7 [DN].

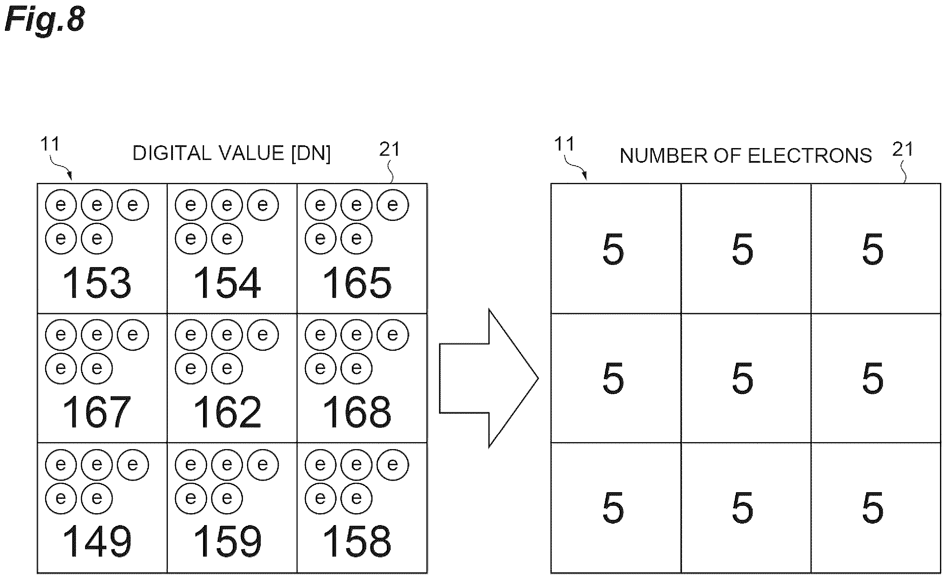

FIG. 8 is a value schematically illustrating a process of converting a digital value for each pixel into a number of electrons. As illustrated in FIG. 8, the second conversion unit 12B can derive the number of electrons corresponding to the digital value by referring to the threshold data. For example, the number of electrons of the pixel 21 whose digital value is 162 [DN] is derived as 5 electrons. The second conversion unit 12B can obtain the average number of photons by dividing the average number of electrons by the quantum efficiency for each pixel. When the quantum efficiency is 100%, the number of electrons and the number of photons are the same. The second conversion unit 12B outputs the number of photons derived for each pixel 21 to the generation unit 13. Furthermore, the second conversion unit 12B outputs instruction information instructing the specifying unit 14 to start processing at the time of outputting the number of photons to the generation unit 13.

Returning to FIG. 1 again, the generation unit 13 is a portion integrating the number of photons of the plurality of pixels 21 belonging to the same column to generate spectroscopic spectrum data based on an integration result. The integration of the number of photons of the plurality of pixels 21 belonging to the same column is processing corresponding to so-called vertical binning. Here, instead of performing vertical binning on the electrical signal from each pixel 21, vertical binning is performed on the number of photons converted from the electrical signal. The spectroscopic spectrum data may be a two-dimensional image representing the number of photons in each pixel 21, or may be a histogram obtained by plotting the number of pixels with respect to the number of photons. The generation unit 13 outputs the generated spectroscopic spectrum data to the computer 6.

The specifying unit 14 is a portion specifying the pixel 21 to be used for integration of the number of photons among the plurality of pixels 21 belonging to the same column. That is, the specifying unit 14 is a portion specifying the pixel 21 to be used for vertical binning in the generation unit 13. The specifying unit 14 specifies, for example, the pixel 21 whose readout noise is equal to or less than a threshold as the pixel 21 to be used for integration of the number of photons. Upon receiving the instruction information from the second conversion unit 12B, the specifying unit 14 generates specific information indicating the specified pixel 21 and outputs the specific information to the generation unit 13. In the generation unit 13, the number of photons of the plurality of pixels 21 belonging to the same column are integrated using only the pixel 21 indicated by the specific information to generate spectroscopic spectrum data based on an integration result.

For example, as illustrated in FIG. 9, the specifying unit 14 may hold a readout noise map M1 with respect to the pixel unit 11. The readout noise map M1 is created, for example, by measuring readout noise of each pixel 21 before the pixel unit 11 is incorporated into the spectroscopic device 5. In the example of FIG. 9, a readout noise map with respect to the horizontally long pixel unit 11 in which the number of pixels in the row direction is large than the number of pixels in the column direction. In the readout noise map M1, the threshold of the readout noise is set to 0.3 [e-rms]. The specifying unit 14 specifies the pixel 21 whose readout noise is 0.3 [e-rms] or less as the pixel to be used for integration of the number of photons on the basis of the readout noise map M1. The specifying unit 14 excludes the pixel 21 whose readout noise exceeds 0.3 [e-rms] (the pixel 21Fa in FIG. 9) from the pixels to be used for integration of the number of photons.

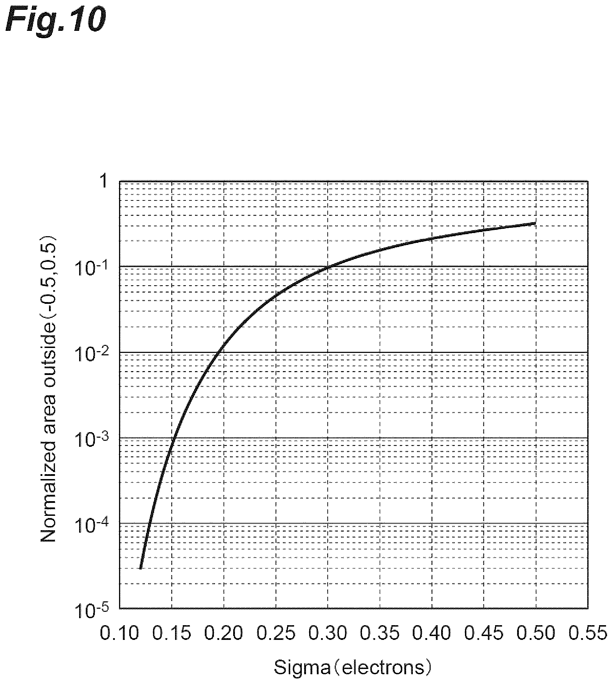

The threshold in the readout noise map M11 is set on the basis of a relationship between readout noise and an erroneous conversion rate at the time of converting an electrical signal into a number of photons. FIG. 10 is a graph showing a relationship between readout noise and an erroneous conversion rate at the time of converting an electrical signal into a number of photons. As shown in FIG. 10, in the case of setting the threshold of the readout noise to 0.3 [e-rms], the erroneous conversion rate at the time of converting the electrical signal into the number of photons can be suppressed to 10% or less.

The specifying unit 14 may specify the pixel 21 to be used for integration of the number of photons such that the number of pixels 21 to be used for integration of the number of photons is the same in each column. In this case, the specifying unit 14 may specify the integrated number of pixels of another column in accordance with the integrated number of pixels of the column having the largest number of pixels excluded from the pixels to be used for integration of the number of photons. For example, when the number of pixels of each column is 1024 pixels, and the integrated number of pixels of a column having the largest number of pixels excluded from the pixels to be used for integration of the number of photons is 1020 pixels (four pixels are excluded), arbitrary four pixels of another column may be set as dummy pixels not to be used for integration of the number of photons, and the integrated number of pixels of all columns may be aligned to 1020 pixels.

The specifying unit 14 may hold in advance area information indicating an area where there is no input of the light L1 in the pixel unit 11, and may exclude the pixel 21 corresponding to the area information from the integration of the number of photons. The area information is generated in advance on the basis of, for example, specifications or an arrangement mode of the spectroscopic element in the spectroscopic optical system 4. The area information may be superimposed on the readout noise map M1. In the example of FIG. 9, the pixels 21 located at both ends of each column belong to an area R where there is no input of the light L1. The pixel 21 belonging to the area R (pixel 21Fb in FIG. 9) is excluded from the integration of the number of photons in each column.

As described above, the spectroscopic optical system 4 includes a spectroscopic element dispersing the light L1 in the wavelength resolution direction. However, it is assumed that the spectroscopic spectrum image actually formed on the pixel unit 11 through the spectroscopic optical system 4 is not linear due to the influence of aberration of the optical system as represented by, for example, Czerny-Turner type spectroscopy.

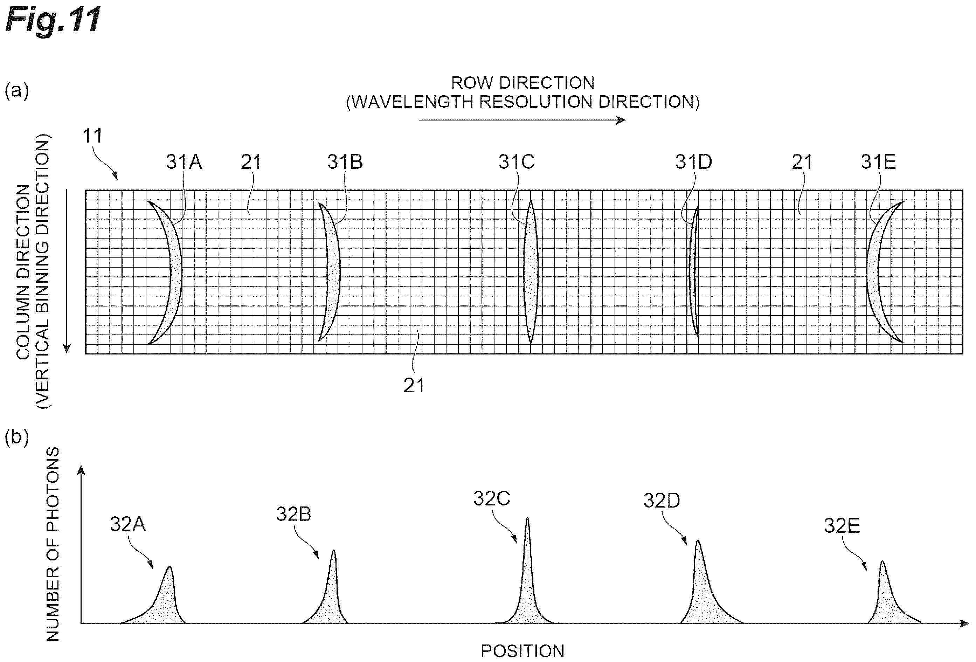

For example, in FIG. 11(a), five wavelength-resolved spectroscopic spectrum images (31A to 31E from the short wavelength side) are formed with respect to the pixel unit 11 in a state of being separated from each other in the row direction (wavelength resolution direction) For example, in the example of FIG. 11(a), the spectroscopic spectrum image 31C located at the center of the pixel unit 11 has a linear shape in the column direction (vertical binning direction), but in each of the spectroscopic spectrum images 31A and 31B and the spectroscopic spectrum images 31D and 31E, a so-called pincushion distortion occurs in which the image is curved toward the center side of the pixel unit 11.

The distortion amount of the spectroscopic spectrum image increases as the optical image is farther from the center of the pixel unit 11. The distortion amount of the spectroscopic spectrum images 31A and 31E is larger than the distortion amount of the spectroscopic spectrum images 31B and 31D. When vertical binning of the number of photons of the pixel 21 of each column is performed in a state where such distortion occurs, as illustrated in FIG. 11(b), there is a concern that the wavelength resolution in the row direction decreases according to the degree of distortion in spectroscopic spectrum data items 32A, 32B, 32D, and 32E based on the spectroscopic spectrum images 31A, 31B, 31D, and 31E excluding the spectroscopic spectrum image 31C among spectroscopic spectrum data items 32A to 32E based on the spectroscopic spectrum images 31A to 31E. Furthermore, peak values of the spectroscopic spectrum data items 32A, 32B, 32D, and 32E decrease, which may cause a problem in that the SN ratio decreases.

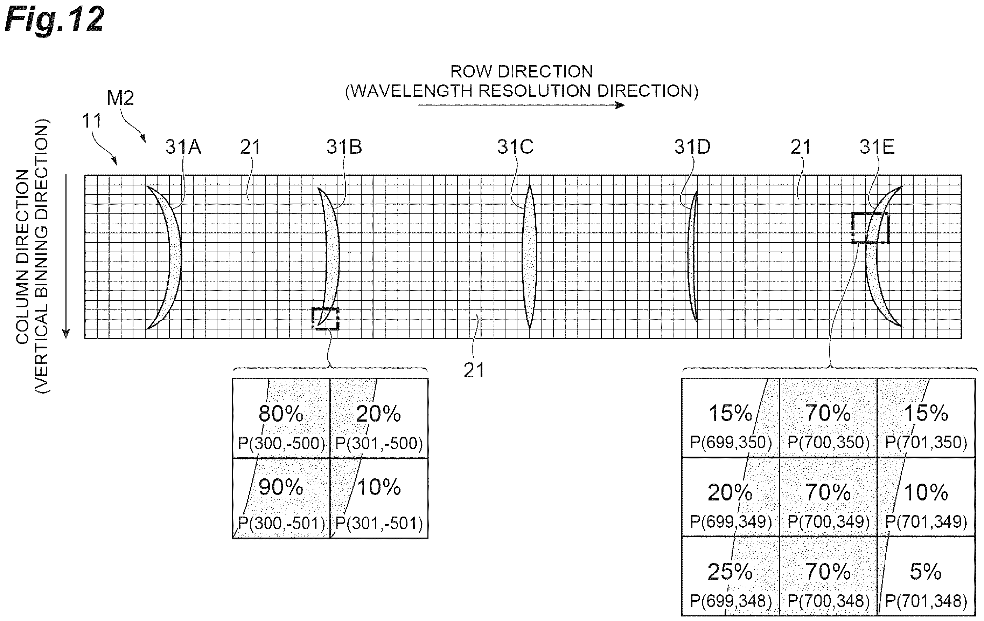

With respect to such a problem, the specifying unit 14 may specify the pixel 21 to be used for integration of the number of photons and an integration ratio of the pixels 21 on the basis of aberration information of the light L1 in the spectroscopic optical system 4, and the generation unit 13 may integrate the number of photons of the plurality of pixels 21 by using the integration ratio. Specifically, as illustrated in FIG. 12, the specifying unit 14 may have an integration ratio map M2 with respect to the pixel unit 11. The aberration information to be used for generating the integration ratio map M2 can be acquired in advance by simulation data or actual measurement data in the case of guiding the light L1 to the spectroscopic optical system 4. In the case of using actual measurement data, aberration information can be acquired on the basis of spectroscopic spectrum data of a plurality of optical images on the premise that there is no local distortion.

The specifying unit 14 may refer to the integration ratio map M2 and perform subpixel processing based on the integration ratio of the plurality of pixels 21 adjacent in the row direction at the time of vertical binning of the number of photons. FIG. 12 illustrates an extraction of the integration ratio of a part of the pixels 21 corresponding to the spectroscopic spectrum image 31B and the spectroscopic spectrum image 31E in the integration ratio map M of the entire pixel unit 11. As described above, the distortion of the spectroscopic spectrum image 31E is larger than the distortion of the spectroscopic spectrum image 31B. Therefore, in the example of FIG. 12, in the vertical binning of the pixel 21 corresponding to the spectroscopic spectrum image 31B, subpixel processing based on the integration ratio of the two pixels 21 adjacent in the row direction is performed. In the vertical binning of the pixel 21 corresponding to the spectroscopic spectrum image 31E, subpixel processing based on the integration ratio of the three pixels 21 adjacent in the row direction is performed.

In the example of FIG. 12, the number of photons of the pixel 21 of coordinates (x,y) is P(x,y). Assuming that the reference of the x coordinate of the pixel 21 corresponding to the spectroscopic spectrum image 31B is 300 and the y coordinate is -512 to +512, vertical binning of the pixel 21 corresponding to the spectroscopic spectrum image 31B is expressed by the following Formula (4). Assuming that the reference of the x coordinate of the pixel 21 corresponding to the spectroscopic spectrum image 31E is 700 and the y coordinate is -512 to +512, vertical binning of the pixel 21 corresponding to the spectroscopic spectrum image 31E is expressed by the following Formula (5).

[Mathematical Formula 1]

$$\sum_{k=-511}^{512} \alpha(300,k) = \alpha(300,-511) + \cdots + \alpha(300,512) \quad \cdots(4)$$

[Mathematical formula 2]

$$\sum_{k=-511}^{512} \beta(700,k) = \beta(700,-511) + \cdots + \beta(700,512) \quad \cdots(5)$$

In FIG. 12, as a part of the pixel 21 corresponding to the spectroscopic spectrum image 31B, four pixels of coordinates (300,-500), coordinates (301,-500), coordinates (300,-501), and coordinates (301,-501) are illustrated. For these four pixels, the integration ratio of P(300,-500) is 80%, the integration ratio of P(301,-500) is 20%, the integration ratio of P(300,-501) is 90%, and the integration ratio of P(301,-501) is 10%. Therefore, in Formula (4), α(300,-500) is obtained by the following Formula (6), and α(300,-501) is obtained by the following Formula (7).

$$\alpha(300,-500) = (80 \times P(300,-500) + 20 \times P(301,-500))/100 \quad ...(6)$$

$$\alpha(300,-501) = (90 \times P(300,-501) + 10 \times P(301,-501))/100 \quad ...(7)$$

Furthermore, in FIG. 12, nine pixels of coordinates (699,350), coordinates (700,350), coordinates (701,350), coordinates (699,349), coordinates (700,349), coordinates (701,349), coordinates (699,348), coordinates (700,348), and coordinates (701,348) are illustrated as a part of the pixel 21 corresponding to the spectroscopic spectrum image 31E. For these nine pixels, the integration ratio of P(699,350) is 15%, the integration ratio of P(700,350) is 70%, the integration ratio of P(701,350) is 15%, the integration ratio of P(699,349) is 20%, the integration ratio of P(700,349) is 70%, the integration ratio of P(701,349) is 10%, the integration ratio of P(699,348) is 25%, the integration ratio of P(700,348) is 70%, and the integration ratio of P(701,348) is 5%.

Therefore, in Formula (5), β(700,350) is obtained by the following Formula (8), and β(700,349) is obtained by the following Formula (9). Furthermore, β(700,348) is obtained by the following Formula (10).

β(700,350) = (15 × P(699,350) + 70 × P(700,350) + 15 × P(701,350))   (8)

β(700,349) = (20 × P(699,349) + 70 × P(700,349) + 10 × P(701,349))   (9)

β(700,348) = (25 × P(699,348) + 70 × P(700,348) + 5 × P(701,348))   (10)

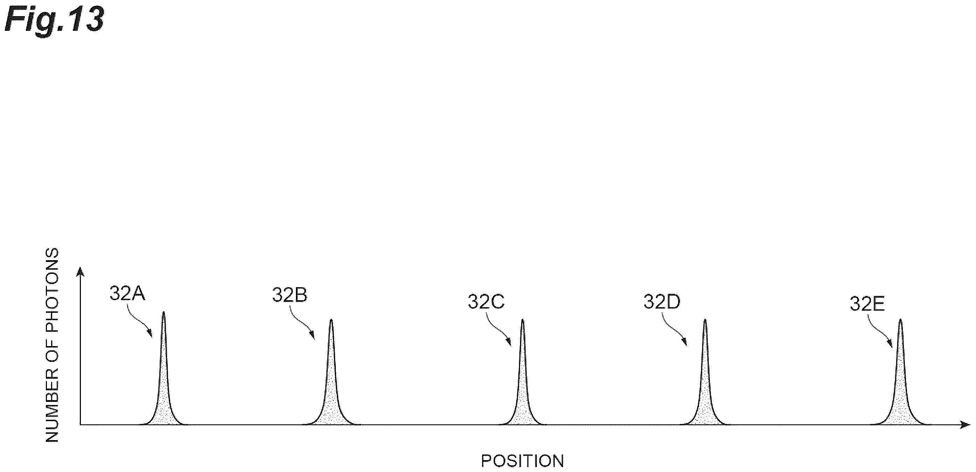

FIG. 13 is a schematic graph showing spectroscopic spectrum data obtained by vertical binning using the integration ratio map. As shown in FIG. 13, by integrating the number of photons of the plurality of pixels 21 using the integration ratio based on the aberration information of the light L1, even when distortion occurs in the spectroscopic spectrum images 31A to 31E, a decrease in wavelength resolution in the row direction can be suppressed in each of spectroscopic spectrum data items 32A to 32E based on the spectroscopic spectrum images 31A to 31E. Furthermore, a decrease in peak value is also suppressed, and the SN ratio is also improved.

Note that, in the example of FIG. 12, only the integration ratio map M2 of the pixel unit 11 is illustrated, but the readout noise map M1 illustrated in FIG. 9 may be superimposed on the integration ratio map M2. Furthermore, area information illustrated in FIG. 9 may be further superimposed on the integration ratio map M2. In this case, the generation unit 13 excludes the pixel 21 specified by the readout noise map M1 and the area information from the pixels to be used for integration of the number of photons, and then performs vertical binning by subpixel processing using the integration ratio map M2.

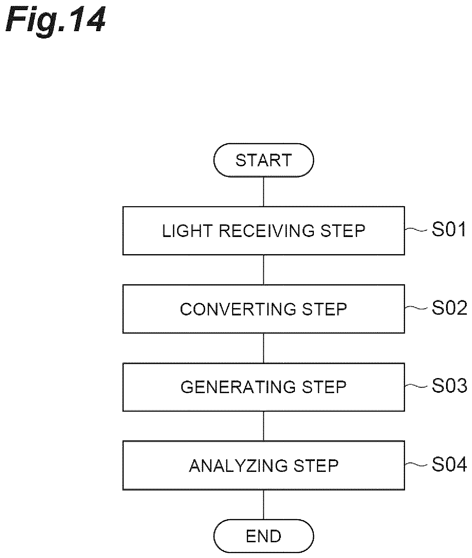

FIG. 14 is a flowchart illustrating a spectroscopic method according to an embodiment of the present disclosure. This spectroscopic method is a method of receiving light wavelength-resolved in a predetermined direction to acquire spectroscopic spectrum data of the light. The spectroscopic method according to the present embodiment is performed using the spectroscopic device 5 described above. As illustrated in FIG. 14, this spectroscopic method includes a light receiving step (step S01), a converting step (step S02), a generating step (step S03), and an analyzing step (step S4).

In the light receiving step S01, the wavelength-resolved light L1 or the Raman scattered light Lr is received by the plurality of pixels 21 arranged in the row direction along the wavelength resolution direction and in the column direction perpendicular to the row direction and converted into an electrical signal. In the converting step S02, the electrical signal from the plurality of pixels 21 into a number of photons. In the present embodiment, the electrical signal is converted into a digital value by the first conversion unit 12A, and then the digital value is converted into the number of photons by the threshold data held by the second conversion unit 12B.

In the generating step S03, the number of photons of the plurality of pixels 21 belonging to the same column are integrated to generate spectroscopic spectrum data based on an integration result. In the present embodiment, in the integration of the number of photons, the pixel 21 whose readout noise is equal to or less than the threshold is specified as the pixel 21 to be used for integration of the number of photons, and only the pixel 21 whose readout noise is equal to or less than the threshold is specified as the pixel 21 to be used for integration of the number of photons.

In the analyzing step S04, the sample S is analyzed on the basis of the spectroscopic spectrum data generated in the generating step S03. For example, the waveform, peak position, peak intensity, half-value width, and the like of the spectroscopic spectrum are analyzed to evaluate various physical properties such as the molecular structure, crystallinity, orientation, and distortion amount of the sample S.

As described above, in the spectroscopic device 5, an electrical signal output from each pixel 21 is converted into the number of photons on the basis of light received by each pixel 21 constituting the pixel unit 11. When the electrical signal is converted into the number of photons, for example, the number of photons of the pixel 21 that has not received light is zero. Therefore, when the number of photons of the plurality of pixels 21 belonging to the same column is integrated after conversion into the number of photons, the influence of readout noise of each pixel 21 can be sufficiently reduced. Therefore, in the spectroscopic device 5, the spectroscopic spectrum data can be acquired with an excellent SN ratio.

In the spectroscopic device 5, the specifying unit 14 specifying the pixel 21 to be used for integration of the number of photons among the plurality of pixels 21 belonging to the same column is provided. By specifying the pixel 21 suitable for integration of the number of photons by the specifying unit 14, the influence of the readout noise of each pixel 21 can be more sufficiently reduced. By reducing the influence of the readout noise of each pixel 21, the conversion accuracy from the electrical signal to the number of photons is enhanced, and the SN ratio of the spectroscopic spectrum data is further improved.

In the spectroscopic device 5, the specifying unit 14 specifies the pixel 21 whose readout noise is equal to or less than a threshold as the pixel 21 to be used for integration of the number of photons. Thereby, the influence of the readout noise of each pixel 21 can be more sufficiently reduced. By reducing the influence of the readout noise of each pixel 21, the conversion accuracy from the electrical signal to the number of photons is enhanced, and the SN ratio of the spectroscopic spectrum data is further improved.

In the spectroscopic device 5, the threshold of the readout noise is set to 0.3 [e⁻rms]. Thereby, an erroneous conversion rate at the time of converting the electrical signal into the number of photons can be suppressed to 10% or less.

In the spectroscopic device 5, the specifying unit 14 specifies the pixel to be used for integration of the number of photons such that the number of pixels 21 to be used for integration of the number of photons is the same in each column. Thereby, it is possible to align integrated values of the readout noise of the pixels 21 of each column to be used for integration of the number of photons in the row direction. Therefore, the SN ratio of the spectroscopic spectrum data can be stably improved.

In the spectroscopic device 5, the specifying unit 14 specifies the pixel 21 to be used for integration of the number of photons and an integration ratio of the pixels 21 on the basis of aberration information of the light in the spectroscopic optical system 4, and the generation unit 13 integrates the number of photons of the plurality of pixels 21 by using the integration ratio. According to such a configuration, even when distortion due to aberration occurs in the image of the wavelength-resolved light L1, the number of photons of the plurality of pixels 21 can be suitably integrated.

In the spectroscopic device 5, the specifying unit 14 holds in advance area information indicating an area where there is no input of the light in the pixel unit 11, and excludes the pixel 21 belonging to the area R indicating the area information from the integration of the number of photons. Thereby, since pixels not requiring integration of the number of photons can be excluded, the influence of the readout noise of each pixel 21 can be further reduced.

In the spectroscopic device 5, the conversion unit 12 includes the first conversion unit 12A converting the electrical signal into a digital value and the second conversion unit 12B converting the digital value into the number of photons on the basis of reference data held in advance. Thereby, the number of photons of each pixel 21 can be acquired in a state where the influence of variations in the gain and offset of each pixel 21 is suppressed.

In the Raman spectroscopic measurement device 1 configured by incorporating the spectroscopic device 5 described above, an electrical signal output from each pixel 21 is converted into the number of photons on the basis of the Raman scattered light Lr received by each pixel 21 constituting the pixel unit 11. When the electrical signal is converted into the number of photons, for example, the number of photons of the pixel 21 that has not received the Raman scattered light Lr is zero. Therefore, when the number of photons of the plurality of pixels 21 belonging to the same column is integrated after conversion into the number of photons, the influence of readout noise of each pixel 21 can be sufficiently reduced. Therefore, in the Raman spectroscopic measurement device 1, spectroscopic spectrum data of the Raman scattered light Lr can be acquired with an excellent SN ratio.

Note that, the spectroscopic device 5 is not limited to be applied to the Raman spectroscopic measurement device 1, and may be applied to other spectroscopic measurement devices such as a fluorescence spectroscopic measurement device, a plasma spectroscopic measurement device, and an emission spectroscopic measurement device. Furthermore, the spectroscopic device 5 may be applied to other spectroscopic measurement devices such as a film thickness measurement device, optical density measurement, laser-induced breakdown spectroscopy (LIBS) measurement, and differential optical absorption spectroscopy (DOAS) measurement.

**Reference Signs List**

1    Raman spectroscopic measurement device

| 2 | light source unit |
|---|---|
| 3 | light guiding optical system |
| 4 | spectroscopic optical system |
| 5 | spectroscopic device |
| 8 | analysis unit |
| 11 | pixel unit |
| 12 | conversion unit |
| 12A | first conversion unit |
| 12B | second conversion unit |
| 13 | generation unit |
| 14 | specifying unit |
| 21 | pixel |
| L1 | light |
| Lr | Raman scattered light |

**Claims**

1. A spectroscopic device receiving light wavelength-resolved in a predetermined direction by a spectroscopic optical system including a spectroscopic element to output spectroscopic spectrum data of the light, the spectroscopic device comprising:

   a pixel unit including a plurality of pixels receiving the wavelength-resolved light to convert the light into an electrical signal, and the plurality of pixels being arranged in a row direction along a wavelength resolution direction and in a column direction perpendicular to the row direction;
   a conversion unit converting the electrical signal from the plurality of pixels into a number of photons; and
   a generation unit integrating the number of photons of a plurality of pixels belonging to the same column to generate spectroscopic spectrum data based on an integration result.

2. The spectroscopic device according to claim 1, further comprising a specifying unit specifying a pixel to be used for integration of the number of photons among the plurality of pixels belonging to the same column.

3. The spectroscopic device according to claim 2, wherein the specifying unit specifies a pixel whose readout noise is equal to or less than a threshold as the pixel to be used for integration of the number of photons.

4. The spectroscopic device according to claim 3, wherein the threshold of the readout noise is set to 0.3 [e⁻rms].

5. The spectroscopic device according to any one of claims 2 to 4, wherein the specifying unit specifies the pixel to be used for integration of the number of photons such that the number of pixels to be used for integration of the number of photons is the same in each column.

6. The spectroscopic device according to any one of claims 2 to 4, wherein the specifying unit specifies the pixel to be used for integration of the number of photons and an integration ratio of the pixels on the basis of aberration information of the light in the spectroscopic optical system, and the generation unit integrates the number of photons of the plurality of pixels by using the integration ratio.

7. The spectroscopic device according to any one of claims 2 to 4, wherein the specifying unit holds in advance area information indicating an area where there is no input of the light in the pixel unit, and excludes a pixel corresponding to the area information from the integration of the number of photons.

8. The spectroscopic device according to any one of claims 1 to 4, wherein the conversion unit includes a first conversion unit converting the electrical signal into a digital value and a second conversion unit converting the digital value into a number of photons on the basis of reference data held in advance.

9. The spectroscopic device according to any one of claims 1 to 4, further comprising an analysis unit analyzing the spectroscopic spectrum data.

10. The spectroscopic device according to any one of claims 1 to 4, further comprising a spectroscopic optical system including a spectroscopic element dispersing the light in the wavelength resolution direction.

11. A Raman spectroscopic measurement device comprising:

the spectroscopic device according to any one of claims 1 to 4;
a light source unit generating light with which a sample is irradiated; and
a light guiding optical system guiding Raman scattered light generated by irradiating the sample with the light to the spectroscopic device.

12. A spectroscopic method of receiving light wavelength-resolved in a predetermined direction to acquire spectroscopic spectrum data of the light, the spectroscopic method comprising:

a light receiving step of receiving the wavelength-resolved light by a plurality of pixels arranged in a row direction along a wavelength resolution direction and in a column direction perpendicular to the row direction to convert the light into an electrical signal;
a converting step of converting the electrical signal from the plurality of pixels into a number of photons; and
a generating step of integrating the number of photons of a plurality of pixels belonging to the same column to generate spectroscopic spectrum data based on an integration result.

Fig.1

# Fig.2

ROW DIRECTION
(WAVELENGTH RESOLUTION DIRECTION)

## Fig.3

Fig.4

Fig.5

DARK IMAGE
(PLURAL SHEETS)                    21

| 96 | 100 | 104 |
| 96 | 100 | 102 |
| 96 | 101 | 102 |  06 |
| 107 | 100 | 108 |  03 |
| 98 | 99 | 101 |  01 |

AVERAGING

OFFSET VALUE [DN]

| 97.7 | 100.7 | 102.6 |
| 101.7 | 102.4 | 106.1 |
| 95.9 | 100.6 | 102.8 |

EP 4 534 963 A1

# Fig.6

*Fig.7*

| GAIN VALUE, OFFSET VALUE | | |
|:---:|:---:|:---:|
| 10.9<br>97.7 | 11.0<br>100.7 | 12.5<br>102.6 |
| 12.9<br>101.7 | 12.0<br>102.4 | 12.1<br>106.1 |
| 10.4<br>95.9 | 11.2<br>100.6 | 11.3<br>102.8 |

| THRESHOLD WHEN NUMBER OF ELECTRONS IS 5 | | |
|:---:|:---:|:---:|
| 146.8<br>157.7 | 150.2<br>161.2 | 158.9<br>171.4 |
| 159.8<br>172.7 | 156.4<br>168.4 | 160.6<br>172.7 |
| 142.7<br>153.1 | 151.0<br>162.2 | 153.7<br>165.0 |

11    21    11    21

EP 4 534 963 A1

*Fig.8*

# Fig.9

ROW DIRECTION
(WAVELENGTH RESOLUTION DIRECTION)

COLUMN DIRECTION
(VERTICAL BINNING DIRECTION)

| | | | |
|---|---|---|---|
| 0.23e- | 0.16e- | 0.09e- | 0.24e- |
| 0.14e- | 0.21e- | 0.18e- | 0.20e- |
| 0.18e- | 0.17e- | 0.11e- | 0.31e- |
| 0.19e- | 0.15e- | 0.27e- | 0.12e- |

| | | | | |
|---|---|---|---|---|
| 0.13e- | 0.21e- | 0.14e- | 0.16e- | 0.27e- |
| 0.17e- | 0.32e- | 0.22e- | 0.12e- | 0.19e- |
| 0.22e- | 0.18e- | 0.27e- | 0.09e- | 0.22e- |
| 0.25e- | 0.14e- | 0.11e- | 0.17e- | 0.13e- |
| 0.18e- | 0.19e- | 0.22e- | 0.13e- | 0.18e- |

## Fig.10

# Fig.11

(a)

ROW DIRECTION
(WAVELENGTH RESOLUTION DIRECTION)

COLUMN DIRECTION
(VERTICAL BINNING DIRECTION)

11   31A   21   31B   31C   31D   21   31E

21

(b)

NUMBER OF PHOTONS

32A   32B   32C   32D   32E

POSITION

EP 4 534 963 A1

# Fig.12

ROW DIRECTION
(WAVELENGTH RESOLUTION DIRECTION)

COLUMN DIRECTION
(VERTICAL BINNING DIRECTION)

M2

11

31A  21  31B  31C  31D  21  31E

21

21

| 80% | 20% |
|---|---|
| P(300,-500) | P(301,-500) |
| 90% | 10% |
| P(300,-501) | P(301,-501) |

| 15% | 70% | 15% |
|---|---|---|
| P(699,350) | P(700,350) | P(701,350) |
| 20% | 70% | 10% |
| P(699,349) | P(700,349) | P(701,349) |
| 25% | 70% | 5% |
| P(699,348) | P(700,348) | P(701,348) |

EP 4 534 963 A1

Fig.13

# *Fig.14*

```
        ┌─────────────┐
        │    START    │
        └─────────────┘
               │
   ┌───────────────────────┐
   │  LIGHT RECEIVING STEP │ ─── S01
   └───────────────────────┘
               │
   ┌───────────────────────┐
   │    CONVERTING STEP    │ ─── S02
   └───────────────────────┘
               │
   ┌───────────────────────┐
   │    GENERATING STEP    │ ─── S03
   └───────────────────────┘
               │
   ┌───────────────────────┐
   │    ANALYZING STEP     │ ─── S04
   └───────────────────────┘
               │
        ┌─────────────┐
        │     END     │
        └─────────────┘
```

## INTERNATIONAL SEARCH REPORT

| International application No. |
|---|
| **PCT/JP2022/046722** |

### A. CLASSIFICATION OF SUBJECT MATTER

*G01J 3/36*(2006.01)i; *G01J 3/44*(2006.01)i; *G01N 21/65*(2006.01)i
FI:  G01J3/44; G01N21/65; G01J3/36

According to International Patent Classification (IPC) or to both national classification and IPC

### B. FIELDS SEARCHED

Minimum documentation searched (classification system followed by classification symbols)

G01J1/00-4/04; G01J7/00-11/00; G01N21/00-21/01; G01N21/17-21/74; G01N21/84-21/958

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 2012/0257196 A1 (RAICU, Valerica) 11 October 2012 (2012-10-11) paragraphs [0001]-[0142], fig. 1-25B | 1-5, 7-12 |
| A | | 6 |
| Y | WO 2016/088568 A1 (HAMAMATSU PHOTONICS KK) 09 June 2016 (2016-06-09) paragraphs [0031], [0039], [0077], fig. 5 | 1-5, 7-12 |
| A | | 6 |
| Y | WO 2019/102637 A1 (HAMAMATSU PHOTONICS KK) 31 May 2019 (2019-05-31) paragraphs [0018]-[0052], fig. 1-16 | 1-5, 7-12 |
| A | | 6 |
| Y | US 2014/0268136 A1 (P & P OPTICA, INC.) 18 September 2014 (2014-09-18) paragraphs [0001]-[0190], fig. 1-14 | 3-5, 7-11 |
| A | JP 2020-501251 A (PHOENIX CONTACT GMBH & CO KG) 16 January 2020 (2020-01-16) paragraphs [0001]-[0124], fig. 1-7 | 6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/046722**

| C. | DOCUMENTS CONSIDERED TO BE RELEVANT | |
|---|---|---|
| Category* | Citation of document, with indication, where appropriate, of the relevant passages | Relevant to claim No. |
| A | JP 2019-219375 A (SAMSUNG ELECTRONICS CO LTD) 26 December 2019 (2019-12-26) paragraphs [0001]-[0111], fig. 1-9 | 6 |

Form PCT/ISA/210 (second sheet) (January 2015)

INTERNATIONAL SEARCH REPORT
Information on patent family members

International application No.

**PCT/JP2022/046722**

| Patent document cited in search report | | | Publication date (day/month/year) | Patent family member(s) | | | Publication date (day/month/year) |
|---|---|---|---|---|---|---|---|
| US | 2012/0257196 | A1 | 11 October 2012 | WO | 2012/154333 | A1 | |
| | | | | EP | 2694932 | A1 | |
| | | | | US | 2012/0257037 | A1 | |
| | | | | US | 2012/0257038 | A1 | |
| WO | 2016/088568 | A1 | 09 June 2016 | US | 2017/0261375 | A1 | |
| | | | | paragraphs [0042], [0050], [0088], fig. 5 | | | |
| | | | | EP | 3229000 | A1 | |
| | | | | CN | 107003183 | A | |
| | | | | KR | 10-2017-0092520 | A | |
| | | | | TW | 201621284 | A | |
| | | | | CN | 109341857 | A | |
| WO | 2019/102637 | A1 | 31 May 2019 | US | 2020/0374478 | A1 | |
| | | | | paragraphs [0037]-[0080], fig. 1-16 | | | |
| | | | | US | 2022/0035056 | A1 | |
| | | | | EP | 3716613 | A1 | |
| | | | | CN | 111373738 | A | |
| | | | | CN | 114866717 | A | |
| | | | | CN | 114866718 | A | |
| | | | | CN | 114866719 | A | |
| US | 2014/0268136 | A1 | 18 September 2014 | WO | 2014/139003 | A1 | |
| | | | | EP | 2972152 | A1 | |
| | | | | CA | 2906948 | A1 | |
| JP | 2020-501251 | A | 16 January 2020 | US | 2021/0358710 | A1 | |
| | | | | paragraphs [0001]-[0141], fig. 1-7 | | | |
| | | | | WO | 2018/108833 | A1 | |
| | | | | EP | 3552068 | A1 | |
| | | | | LU | 93350 | B1 | |
| | | | | CN | 110073303 | A | |
| JP | 2019-219375 | A | 26 December 2019 | US | 2019/0391015 | A1 | |
| | | | | paragraphs [0001]-[0123], fig. 1-9 | | | |
| | | | | KR | 10-2019-0143244 | A | |

Form PCT/ISA/210 (patent family annex) (January 2015)

**EP 4 534 963 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016180732 A